# EUROPÄISCHE PATENTSCHRIFT

(11) **EP 1 699 864 B1**
(45) Veröffentlichungstag und Bekanntmachung des Hinweises auf die Patenterteilung: **22.06.2011**
(21) Anmeldenummer: 04803385.6
(22) Anmeldetag: 01.12.2004
(51) Int. Cl.: C08K 9/00, C09C 1/00, C08K 3/30

(54) **EPOXIDHARZ MIT ERHÖHTER SCHLAGBIEGEFESTIGKEIT UND BRUCHDEHNUNG**
EPOXY RESIN HAVING IMPROVED FLEXURAL IMPACT STRENGTH AND ELONGATION AT RUPTURE
RESINES EPOXY A RESISTANCE A LA FLEXION PAR CHOC ET A ALLONGEMENT A LA RUPTURE ACCRUS

(30) Priorität: 06.12.2003 DE 10357115
(43) Veröffentlichungstag der Anmeldung: 13.09.2006
(73) Patentinhaber: Solvay Infra Bad Hönningen GmbH, 30173 Hannover (DE)
(72) Erfinder: STAHL, Rainer, 59823 Arnsberg (DE); PARK, Jai, Won, 37085 Göttingen (DE); HARDINGHAUS, Ferdinand, 53604 Bad Honnef (DE); GLENDE, David, Christopher, 37079 Göttingen (DE); KÖHLER, Karl, 31199 Diekholzen (DE)
(74) Vertreter: Vande Gucht, Anne
(86) Internationale Anmeldenummer: PCT/EP2004/013613
(87) Internationale Veröffentlichungsnummer: WO 2005/054357

(56) Entgegenhaltungen:
- EP-A- 0 406 657
- DE-A1- 3 347 191
- DE-A1- 3 718 277
- GB-A- 936 057
- US-A- 5 008 309
- US-A1- 2003 124 048
- PATENT ABSTRACTS OF JAPAN Bd. 006, Nr. 127 (C-113), 13. Juli 1982 (1982-07-13) & JP 57 051119 A (ONAHAMA SAKAI KAGAKU KK), 25. März 1982 (1982-03-25)

## Beschreibung

Die Erfindung bezieht sich auf ein Epoxidharz mit erhöhter Schlagbiegefestigkeit und Bruchdehnung, entsprechendes Kompositmaterial, ein Gemisch von EpoxidHarz-Vorstufe (vorzugsweise Härter oder Harz) und Bariumsulfat, ein Verfahren zur Herstellung des Epoxidharzes und die Verwendung des Kompositmaterials für verschiedene Zwecke.

Als Epoxidharze werden organische, in der Regel oligomere Verbindungen mit mehr als einer Epoxid-Gruppe pro Molekül bezeichnet. Diese oligomeren Verbindungen können mit geeigneten Härtern in Duroplaste überführt werden. Epoxidharze werden beispielsweise als Gießharze oder auch als Laminate (beispielsweise im Flugzeug-, Fahrzeug- oder Bootsbau) verwendet.

Monoepoxidverbindungen, die als Ausgangsmaterial für die Herstellung von Epoxidharzen eingesetzt werden, sind besonders das Epichlorhydrin, aber auch Glycidol, Styroloxid, Zyklohexenoxid und Acrylsäure- bzw. Methacrylsäureglycidylester. Die Harzbildung erfolgt durch Umsetzung insbesondere mit Bisphenol-A. Für spezielle Harze sind auch andere Polyole wie aliphatische Glykole geeignet. Dabei können flüssige Harze nach der "advancement"-Methode noch kettenverlängert werden. Als Härtungsmittel eignen sich beispielsweise Dicarbonsäureanhydride oder Aminhärter. Eine Erläuterung von Grundlagen findet sich beispielsweise in Ullmann's Enzyklopädie der Technischen Chemie, 4. Auflage, Bd. 10, Seiten 563 - 580 und in Kirk-Othmer, Encyclopedia of Chemical Technology, 4. Auflage, Bd. 9, Seiten 730 - 755.

Epoxidharz wird u. a. für Kompositmaterialien eingesetzt. Diese Kompositmaterialien sind aufgebaut aus Matrixmaterial und Verstärkungen. Als Matrixmaterial werden überwiegend Epoxidharze eingesetzt. Verstärkungsmaterial ist bevorzugt faserartig; bevorzugte Materialien sind Glasfasern, Carbonfasern und Aramidfasern. Grundlegende Information hierzu finden sich in Kirk-Othmer, Encyclopedia of Chemical Technology, 4. Ausgabe, Bd. 7, Seiten 1 - 40. Kompositmaterialien mit Epoxidmatrix sind beispielsweise im Flugzeugbau, im Raumschiffbau, für Satelliten, Fahrzeuge, im Eisenbahnbau, im Bootsbau, für Gebäudebauteile, Schwungräder, Druckgefäße brauchbar, siehe beispielsweise veröffentlichte US-Patentanmeldung 2003/0064228 A1 und EP-A-1 094 087. Ein anderes Anwendungsgebiet sind Rotoren für Windkraftanlagen, siehe Kunststoffe, Heft 11 (2002), Seiten 119 - 124.

Die Erfindung beruht auf der Erkenntnis, dass desagglomeriertes Bariumsulfat gehärteten Epoxidharzen eine erhöhte Schlagbiegefestigkeit und Bruchfestigkeit verleiht.

Gegenstand der vorliegenden Erfindung ist somit ein gehärtetes Epoxidharz mit erhöhter Schlagbiegefestigkeit und Bruchfestigkeit, welches desagglomeriertes, einen Kristallisationsinhibitor und ein Dispergiermittel enthaltendes Bariumsulfat einer mittleren (Primär)-Partikelgröße <0,5 µm enthält. Dieser Effekt war unvorhersehbar. Andere Füllstoffe oder auch nicht desagglomeriertes Bariumsulfat führen zu einer verringerten Schlagbiegefestigkeit und Bruchdehnung.

Bevorzugt ist desagglomeriertes Bariumsulfat, welches eine mittlere (Primär-)-Partikelgröße von <0,1 µm, insbesondere <0,08 µm (= 80 nm), ganz besonders bevorzugt <0,05 µm (= 50 nm), noch mehr bevorzugt <0,03 µm (= 30 nm) aufweist. Hervorragend sind Partikelgrößen <20 µm, ganz besonders solche mit einer mittleren Primärpartikelgröße von <10 nm. Es handelt sich um mittlere Partikelgrößen, bestimmt durch XRD bzw. Laserbeugungsmethoden. Ein bevorzugtes Bariumsulfat ist erhältlich durch Fällen von Bariumsulfat in Anwesenheit eines kristallisationsinhibierenden Mittels, wobei während der Fällung ein Dispergiermittel anwesend ist und/oder das Bariumsulfat nach der Fällung in Anwesenheit eines Dispergiermittels desagglomeriert wird.

Die Menge an kristallisationsinhibierendem Mittel und Dispergiermittel im desagglomerierten Bariumsulfat ist flexibel. Pro Gewichtsteil Bariumsulfat können jeweils bis zu 2 Gewichtsteile, vorzugsweise bis zu 1 Gewichtsteil kristallisationsinhibierendes Mittel und Dispergiermittel enthalten sein. Kristallisationsinhibierendes und Dispergiermittel sind bevorzugt in einer Menge von jeweils 1 bis 50 Gew.-% im desagglomerierten Bariumsulfat enthalten. Das Bariumsulfat ist bevorzugt in einer Menge von 20 bis 80 Gew.-% enthalten.

Es ist bekannt, daß Bariumsulfat bei herkömmlicher Herstellung Agglomerate ("Sekundärpartikel") aus Primärpartikeln bildet. Der Begriff "desagglomeriert" bedeutet in diesem Zusammenhang nicht, daß die Sekundärpartikel vollständig zu isoliert vorliegenden Primärpartikeln zerkleinert sind. Er bedeutet, daß die Bariumsulfat-Sekundärteilchen nicht derart agglomeriert vorliegen, wie sie bei Fällungen üblicherweise anfallen, sondern in Form kleinerer Agglomerate. Bevorzugt weist das im erfindungsgemäßen Epoxidharz zu verwendende desagglomerierte Bariumsulfat Agglomerate (Sekundärteilchen) auf, von denen mindestens 90 % eine Partikelgröße von kleiner als 2 µm, vorzugsweise kleiner als 1 µm aufweisen. Besonders bevorzugt sind mindestens 90 % der Sekundärteilchen kleiner 250 nm, ganz besonders bevorzugt kleiner als 200 nm. Noch mehr bevorzugt sind mindestens 90 % der Sekundärteilchen kleiner als 130 nm, insbesondere bevorzugt kleiner als 100 nm, ganz insbesondere bevorzugt kleiner als 80 nm; noch bevorzugter weisen 90 % der Sekundärpartikel eine Größe von <50 nm auf. Dabei liegt das Bariumsulfat teilweise oder sogar weitgehend vollständig in Form nicht agglomerierter Primärpartikel vor. Es handelt sich um mittlere Partikelgrößen, bestimmt durch XRD bzw. Laserbeugungsmethoden.

Bevorzugte Kristallisationsinhibitoren weisen mindestens eine anionische Gruppe auf. Bevorzugt enthält der Kristallisationsinhibitor als anionische Gruppe mindestens eine Sulfat-, mindestens eine Sulfonat-, mindestens zwei Phosphat-, mindestens zwei Phosphonat- oder mindestens zwei Carboxylatgruppen auf.

Als Kristallisationsinhibitor können beispielsweise für diesen Zweck bekanntermaßen verwendete Substanzen enthalten sein, beispielsweise kürzerkettige Polyacrylate, üblicherweise in Form des Natriumsalzes; Polyether wie Polyglykolether; Ethersulfonate wie Laurylethersulfonat in Form des Natriumsalzes; Ester der Phthalsäure und ihrer Derivate; Ester des Polyglycerins; Amine wie Triethanolamin ; und Ester von Fettsäuren wie Stearinsäureester, wie sie in der WO 01/92157 genannt werden.

Als Kristallisationsinhibitor kann auch eine Verbindung oder ein Salz der Formel (I) eingesetzt werden mit einer KohlenstoffketteR und n Substituenten [A(O)OH] worin
- R: ein organischer Rest ist, der hydrophobe und/oder hydrophile Teilstrukturen auf- weist und wobei R eine niedermolekulare, oligomere oder polymere, ggf. ver- zweigte und/oder cyclische Kohlenstoffkette ist, die ggf. Sauerstoff, Stickstoff, Phosphor oder Schwefel als Heteroatome enthält, und/oder durch Reste substitu- iert ist, die über Sauerstoff, Stickstoff, Phosphor oder Schwefel an den Rest R gebunden sind und
wobei
- A: C, P (OH), OP(OH), S(O) oder OS(O) bedeutet,
und n 1 bis 10.000 ist.

Wenn es sich um monomere oder oligomere Verbindungen handelt, ist n vorzugsweise 1 bis 5.

Zu brauchbaren Kristallisationsinhibitoren dieser Art gehören hydroxysubstituierte Carbonsäureverbindungen. Beispielsweise sind hydroxysubstituierte Mono- und Dicarbonsäuren mit 1 bis 20 Kohlenstoff-Atomen in der Kette (gerechnet ohne die Kohlenstoffatome der COO-Gruppen) gut brauchbar, wie beispielsweise Zitronensäure, Äpfelsäure (2-Hydroxy-1,4-dibutansäure), Dihydroxybernsteinsäure und 2-Hydroxyölsäure.

Sehr gut brauchbar sind auch Phosphonsäureverbindungen mit einem Alkyl-(bzw. Alkylen-)Rest mit einer Kettenlänge von 1 bis 10 Kohlenstoffatomen. Dabei sind Verbindungen brauchbar, die eine, zwei oder mehr Phosphonsäurereste aufweisen. Sie können zusätzlich durch Hydroxygruppen substituiert sein. Gut brauchbar sind beispielsweise 1-Hydroxyethylendiphosphonsäure, 1,1-Diphosphonopropan-2,3-dicarbonsäure, 2-Phosphonobutan-1,2,2,4-tricarbonsäure. Diese Beispiele zeigen, daß auch solche Verbindungen brauchbar sind, die sowohl Phosphonsäurereste als auch Carbonsäurereste aufweisen.

Sehr gut brauchbar sind auch Verbindungen, die durch 1 bis 5 oder gar mehr Stickstoffatome sowie 1 oder mehrere, z. B. bis zu 5 Carbonsäure- oder Phosphonsäurereste enthalten und gegebenenfalls zusätzlich durch Hydroxygruppen substituiert sind. Hierzu gehören z. B. Verbindungen mit einer Ethylendiamin- oder Diethylentriamin-Grundstruktur und Carbonsäure- oder Phosphonsäuresubstituenten. Gut brauchbare Verbindungen sind beispielsweise Diethylentriamin-Pentakis-(Methanphosphonsäure), Iminodibernsteinsäure, Diethylentriaminpentaessigsäure, N-(2-Hydroxyethyl)-ethylendiamin-N,N,N-triessigsäure.

Sehr gut brauchbar sind auch Polyaminosäuren, beispielsweise Polyasparaginsäure.

Sehr gut brauchbar sind auch schwefelsubstituierte Carbonsäuren mit 1 bis 20 C-Atomen (gerechnet ohne die C-Atome der COO-Gruppe) und 1 oder mehr Carbonsäureresten, z. B. Sulfobernsteinsäure-bis-2-ethylhexylester (dioctylsulfosuccinat).

Es können natürlich auch Gemische der Additive, beispielsweise auch mit weiteren Additiven wie phosphoriger Säure, eingesetzt werden.

Ganz besonders bevorzugt sind Zitronensäure und Natriumpolyacrylat, z. B. Dispex^{®}N40, als Kristallisationsinhibitor.

Die Herstellung des vorstehend beschriebenen Bariumsulfat-Zwischenprodukts mit den Kristallisationsinhibitoren der Formel (I) wird vorteilhaft so durchgeführt, daß man das Bariumsulfat in Anwesenheit des vorgesehenen Kristallisationsinhib itors fällt. Es kann vorteilhaft sein, wenn mindestens ein Teil des Inhibitors deprotoniert ist, beispielsweise indem der Inhibitor mindestens teilweise oder vollständig als Alkalimetallsalz, beispielsweise als Natriumsalz oder als Ammoniumsalz eingesetzt wird. Natürlich kann man auch die Säure einsetzen und eine entsprechende Menge der Base oder als Lauge zufügen.

Das desagglomerierte Bariumsulfat enthält neben dem Kristallisationsinhibitor auch ein dispergierend wirkendes Mittel. Das Dispergiermittel kann gleich bei der Fällung oder in einer sich nach der Fällung anschließenden Desagglomerierstufe zugesetzt werden. Es verhindert die Reagglomeration.

Bevorzugt weist das Dispergiermittel eine oder mehr anionische Gruppen auf, die in Wechselwirkung mit der Oberfläche des Bariumsulfats treten können. Bevorzugte Gruppen sind die Carboxylatgruppe, die Phosphatgruppe, die Phosphonatgru ppe, die Bisphosphonatgruppe, die Sulfatgruppe und die Sulfonatgruppe. Das Disperg iermittel enthält Gruppen zur An- oder Einkoppelung in das Epoxidharz. Dies sind üblicherweise Gruppen, die diese An- oder Einkoppelung chemisch bewirken, z. B. OH-Gruppen oder NH-Gruppen oder NH₂-Gruppen. Bevorzugt sind Polyethergruppen enthalten, die terminal durch Hydroxylgruppen substituiert sind. Infolge dieser Substitution sind die Bariumsulfat-Partikel äußerlich hydrophilisiert. Derartiges erfindungsgemäßes Bariumsulfat, zeigt keine Neigung zur Reagglomeration. Es kann bei der Anwendung sogar zu weiterer Desagglomeration kommen. Ganz besonders gute Eigenschaften weist ein Bariumsulfat auf, das mit einem Dispergiermittel gecoatet ist, welches eine Vielzahl von Polycarboxylatgruppen und eine Vielzahl von Hydroygruppen aufweist sowie weitere Substituenten, die sterisch anspruchsvoll sind, z. B. Polyethergruppen. Eine ganz bevorzugte Gruppe von Dispersionsmitteln sind terminal an den Polyethergruppen durch Hydroxygruppen substituierte Polyetherpolycarboxylate, beispielsweise solche, die unter dem Begriff Melpers^{®} von der Firma SKW angeboten werden.

Es gibt mehrere Varianten, das desagglomerierte Bariumsulfat zur Verfügung zu stellen.

Die erste Variante sieht vor, Bariumsulfat in Anwesenheit eines kristallisationsinhibierenden Mittels zu fällen und anschließend eine Desagglomeration durchzuführen. Diese Desagglomeration wird in Anwesenheit eines der oben erwähnten Dispergiermittel durchgeführt.

Die zweite Variante sieht vor, Bariumsulfat in Anwesenheit eines kristallisationsinhibierenden Mittels und eines der oben genannten Dispergiermittels zu fällen.

Die erste Variante wird nun weiter erläutert.

Bariumsulfat wird nach üblichen Methoden gefällt, z. B. durch Reaktion von Bariumchlorid oder Bariumhydroxid mit Alkalisulfat oder Schwefelsäure. Dabei werden Verfahren angewendet, bei denen sich Primärpartikel mit der oben angegebenen Feinheit bilden. Bei der Fällung setzt man Additive ein, die die Kristallisation inhibieren, beispielsweise solche, wie sie in der WO 01/92157 genannt werden, oder die vorstehend genannten Verbindungen der Formel (I), die kristallisationsinhibierende Wirkung aufweisen. Gewünschtenfalls wird das gefällte Bariumsulfat zur Paste oder sogar bis zum trocknen Pulver entwässert. Es folgt eine Naßdesagglomeration. Als Flüssigkeit kann Wasser oder eine organische Flüssigkeit gewählt werden, z. B. ein Alkohol. Die Desagglomeration, die beispielsweise in einer Perlmühle durchgeführt wird, erfolgt dann in Anwesenheit eines Dispergiermittels. Die Dispergiermittel sind oben genannt. Die Vermahlung und damit die Desagglomeration werden solange durchgeführt, bis der gewünschte Grad der Desagglomeration erreicht ist. Bevorzugt führt man die Desagglomeration solange durch, bis das erfindungsgemäße desagglomerierte Bariumsulfat Sekundärteilchen aufweist, von denen 90 % kleiner als 2 µm, vorzugsweise kleiner als 1 µm, besonders bevorzugt kleiner als 250 nm, ganz besonders bevorzugt kleiner als 200 nm sind. Noch mehr bevorzugt desagglomeriert man, bis 90 % der Sekundärteilchen kleiner als 130 nm, insbesondere bevorzugt kleiner als 100 nm, ganz insbesondere bevorzugt kleiner als 80 nm sind, noch bevorzugter <50 nm sind. Dabei kann das Bariumsulfat teilweise oder sogar weitgehend vollständig in Form nicht agglomerierter Primärpartikel vorliegen (mittlere Partikelgrößen, bestimmt durch XRD bzw.Laserbeugungsmethoden). Die beim Naßagglomerieren gebildete Suspension des desagglomerierten, ein kristallisationsinhibierendes Mittel sowie ein Dispergiermittel enthaltenden Bariumsulfats kan n dann als solche verwendet werden. Man kann auch eine lagerstabile Suspension erzeugen durch Zusatz von Säure, beispielsweise Essigsäure oder höherer Homologe wie Propionsäure.

Man kann auch eine Trocknung vornehmen, z. B. eine Sprühtrocknung. Die dabei gebildeten Partikel zerfallen wieder sehr leicht in das desagglomerierte Bariumsulfat. Das erfindungsgemäße Bariumsulfat ist aus sehr kleinen Primärpartikeln gebildet, die Sekundärpartikel liegen in desagglomeriertem Zustand vor, und es ist redispergierbar.

Die zweite Variante zur Herstellung von desagglomeriertem Bariumsulfat sieht vor, daß man die Fällung, z. B. durch Reaktion von Bariumchlorid oder Bariumhydroxid mit Alkalisulfat oder Schwefelsäure, in Anwesenheit eines kristallisationsinhibierenden Mittels und eines Dispergiermittels durchführt; diese Vorgehensweise führt bereits bei der Fällung zur Bildung von desagglomeriertem Bariumsulfat, das leicht redispergierbar ist. Derartige Dispergiermittel, die den Bariumsulfat-Partikeln eine elektrostatisch, sterisch oder elektrostatisch und sterisch die Agglomeration bei der Fällung hemmende und die Reagglomeration verhindernde Oberfläche verleihen, sind weiter oben erläutert. Bei dieser Ausführungsform entsteht ein im Sinne der Erfindung desagglomeriertes Bariumsulfat bereits bei der Fällung.

Das somit gefällte, Kristallisationsinhibitor und Dispergiermittel enthaltende Bariumsulfat ist im Prinzip gebrauchsfertig und kann als wässrige Suspension verwendet werden; wie oben beschrieben, ist eine Stabilisierung der Suspension mit Säure möglich. Man kann das gefällte Bariumsulfat auch teilweise oder ganz entwässern, z. B. durch Sprühtrocknung. Es entsteht dann eine Paste oder ein Pulver. Das Pulver weist naturgemäß Agglomerate auf. Diese sind aber nicht, wie bei Bariumsulfat nach dem Stand der Technik, reagglomeriert, sondern es handelt sich um lockere Aggregate, die in flüssigen Medien redispergierbar sind und dabei wieder desagglomerierten Partikel bilden. Alternativ kann das Pulver unter Zusatz von Wasser oder organischen Flüssigkeiten in eine Suspension überführt werden; auch dabei werden wieder die desagglomerierten Partikel erhalten, wie sie vor der Trocknung vorlagen. In manchen Anwendungsfällen ist eine Zerkleinerung der getrockneten Aggregate oder ihre Überführung in eine Suspension vor der Anwendung nicht nötig, weil sie sich bei der Anwendung in die desagglomerierten Partikel umwandeln, beispielsweise wenn sie in flüssige Vorprodukte eingearbeitet werden. Es wird oft sogar eine weitere Desagglomeration beobachtet.

Das desagglomerierte Bariumsulfat weist bevorzugt eine Partikelgröße (Primärpartikel) im Bereich von 0,01 bis 0,5 µm, ganz besonders 0,01 bis 0,1 µm, beispielsweise von 0,01 µm bis 0,08 µm auf. Es ist bevorzugt in einer Menge von 1 bis 50 Gew.-%, vorzugsweise 1 bis 25 Gew.-%, im gehärteten Epoxidharz enthalten.

Ein ganz besonders bevorzugtes gehärtetes Epoxidharz gemäß der vorliegenden Erfindung ist dadurch erhältlich, daß das Bariumsulfat in einer Vorstufe des gehärteten Epoxidharzes, bevorzugt im Härter und/oder im (noch nicht mit Härter versetzten, also noch nicht ausgehärteten) Harz, dispergiert wird. Hierzu kann man beispielsweise Rührer mit hoher Drehzahl verwenden.

Ganz besonders bevorzugt gehärtete Epoxidharze sind solche, die dadurch erhältlich sind, daß das Bariumsulfat in einer Vorstufe des gehärteten Epoxidharzes, vorzugsweise im Härter oder im noch nicht gehärteten Harz dispergiert wird. In diesem Fall ist das Bariumsulfat besonders gut und dauerhaft desagglomeriert.

Gut geeignet sind Epoxide auf Basis von Bisphenol-A und Epichlorhydrin. Sie können noch Beimischungen enthalten, beispielsweise Reaktionsprodukte aus Bisphenol-F und Epichlorhydrin oder Glycidylether, z. B. 1,6-Hexandioldiglycidylether. Gut brauchbar sind Epoxide mit 50 bis 100 Gew.-% Bisphenol-A/Epichlorhydrin, 0 bis 50 Gew.-%, vorzugsweise 10 bis 25 Gew.-% Bisphenol-F/Epichlorhydrin und 0 bis 50 Gew.-%, vorzugsweise 10 bis 25 Gew.-% 1,6-Hexandiolglycidylether. Ein Handelsprodukt solch einer Zusammensetzung ist Epilox Harz M730^{®}.

Gut geeignete Härter sind z. B. solche auf Basis von Polyoxyalkylenaminen. Es können auch Gemische eingesetzt werden, z. B. Gemische der Polyoxyalkylenamine mit Cyclohexandiaminen oder Piperazinylethylaminen. Gut brauchbar ist beispielsweise ein Härter mit 50 bis 100 Gew.-% Polyoxyalkylenamin, 0 bis 50 Gew.-%, vorzugsweise 10 bis 25 Gew.-% 1,2-Cyclohexandiamin (auch als Isomerengemisch), und 0 bis 50 Gew.-%, vorzugsweise 10 bis 25 Gew.-% 2-Piperazin-1-ylethylamin. Ein Handelsprodukt mit solch einer Zusammensetzung ist Epilox M888^{®}.

Die erfindungsgemäßen gehärteten Epoxidharze können weitere übliche Bestandteile wie beispielsweise Härtungsbeschleuniger oder Pigmente aufweisen.

Ein weiterer Gegenstand der Erfindung ist ein Verfahren zur Herstellung der erfindungsgemäßen Epoxidharze. Es sieht vor, daß man Bariumsulfat einer Primär-Partikelgröße <0,1 µm (bevorzugte Partikelgrößen siehe oben) in einer Vorstufe des gehärteten Epoxidharzes desagglomeriert. Bevorzugt führt man die Desagglomeration des Bariumsulfats im Härter, dem noch nicht mit Härter vermischten Epoxidharz oder in beidem durch. Durch Vermischen der Ausgangsmaterialien, von denen mindestens eins das desagglomerierte, verteilte Bariumsulfat enthält, z. B. von Harz und Härter, oder Vermischen der bariumsulfathaltigen Komponente mit nicht bariumsulfathaltigem Härter bzw. Harz wird gehärtetes Epoxidharz erzeugt.

Noch ein Gegenstand der Erfindung ist ein Kompositmaterial, welches das erfindungsgemäße gehärtete Epoxidharz enthält. Dabei kann es sich beispielsweise um Komposite handeln, die Fasern wie Glasfasern, Carbonfasern oder Aramidfasern in der Matrix enthalten. Es kann sich auch um Laminate handeln, dabei sind Fasern oder ein Gewebe in einer Polymermatrix in individuellen Schichten zusammengefügt.

Die Herstellung der Komposite erfolgt nach bekannten Methoden, beispielsweise durch Naßlaminieren, durch Infusion oder über Prepregs.

Ein weiterer Gegenstand der Erfindung ist das Gemisch aus Vorstufe des Epoxidharzes, vorzugsweise Härter und desagglomeriertem Bariumsulfat, mit einer Primär-Partikelgröße <0,1 µm, und gegebenenfalls Dispergiermittel. Die Menge an Bariumsulfat in diesem Gemisch beträgt vorzugsweise 0,1 bis 50 Gew.-%.

Noch ein Gegenstand der Erfindung ist ein Gemisch aus härterfreiem Epoxidharz und desagglomeriertem Bariumsulfat mit einer Partikelgröße <0,1 µm. Bevorzugte Partikelgrößen des Bariumsulfats sind weiter oben angegeben. Die Menge an Bariumsulfat in diesem Gemisch beträgt vorzugsweise 0,1 bis 50 Gew.-%.

Das erfindungsgemäße Kompositmaterial kann als Konstruktionsmaterial, beispielsweise im Bootsbau, in Windkraftanlagen, für den Rohrbau, für Behälter, im Flugzeugbau, im Fahrzeugbau verwendet werden.

Es weist den Vorteil auf, daß die Schlagbiegefestigkeit und Bruchdehnung wünschenswerterweise erhöht ist, was besonders bei Laminaten vorteilhaft ist, da die Delaminationsgefahr verringert wird.

Die folgenden Beispiele sollen die Erfindung weiter erläutern, ohne sie in ihrem Umfang einzuschränken.

### Beispiele

### Beispiel 1:

Herstellung von chemisch dispergiertem Bariumsulfat durch Fällung in Anwesenheit von kristallisationsinhibierenden Mitteln und anschließendem Vermahlen in Anwesenheit von polymeren Dispergiermitteln

### 1.1. Herstellung mit Zitronensäure als Kristallisationsinhibitor

Als Ausgangsmaterialien wurden Bariumchlorid und Natriumsulfat eingesetzt. Bariumchlorid-Lösung und Natriumsulfatlösung wurden in Anwesenheit von Zitronensäure als Kristallisationsinhibitor unter Fällung von Bariumsulfat zur Reaktion gebracht. Das gefällte Bariumsulfat wurde getrocknet, in Isopropanol suspendiert, als Dispergiermittel wurde ein an den Polyethergruppen terminal durch Hydroxygruppen substituiertes Polyetherpolycarboxylat (Melpers^{®}0030) zugegeben und in einer Perlmühle desagglomeriert. Das Isopropanol wurde abgedampft. Das Bariumsulfat enthielt etwa 7,5 Gew.-% Zitronensäure und etwa 25 Gew.-% des Polyetherpolycarboxylates.

### 1.2. Herstellung unter Verwendung anderer Ausgangsverbindungen und eines anderen Kristalliationsinhibitors

Beispiel 1.1. wurde wiederholt. Anstelle von Bariumchlorid wurde Bariumhydroxidlösung eingesetzt und anstelle von Natriumsulfat wurde Schwefelsäure verwendet. Statt Zitronensäure wurden 3 Gew.-% Dispex^{®} N40 eingesetzt (ein Natriumpolyacrylat). Melpers^{®}0030 wurde in einer Menge von 8,5 Gew.-% eingesetzt.

### Beispiel 2:

Herstellung der Vormischung, die das desagglomerierte Bariumsulfat chemisch dispergiert enthält.

Das gemäß Beispiel 1.2 hergestellte desagglomerierte Bariumsulfat wurde im Härter suspendiert. Dabei wurde eine Desagglomeration beobachtet.

### Allgemeines im Hinblick auf die Herstellung des Epoxidharzes:

Als Epoxidharz wurde Epilox M730^{®} der Firma Leuna-Harze GmbH eingesetzt. Als Härter wurde Epilox M888^{®} eingesetzt, ebenfalls von der Firma Leuna-Harze GmbH.

Das gehärtete Epoxidharz bestand bei allen Versuchen aus 100 Gewichtsteilen Epilox M730^{®}, 24 Gewichtsteilen Epilox M880^{®} und 31 Gewichtsteilen Füllstoff (inklusive Kristallisationsinhibitor und Dispergiermittel, soweit das gemäß Beispiel 1 hergestellte Bariumsulfat verwendet wurde).

Die Dispergierung des Füllstoffes erfolgte im Harz bzw. im Härter. Als erfindungsgemäßer Füllstoff wurde die gemäß Beispiel 2 hergestellte Vormischung aus Bariumsulfat und Härter eingesetzt.

Es wurden Prüfplatten zur Ermittlung der Eigenschaften hergestellt, wobei folgendermaßen vorgegangen wurde:
Sofern ein Füllstoff-Härter- oder Füllstoff-Harz-(Dispergiermittel)-Gemisch eingesetzt wurde, wurde es vorab folgendermaßen hergestellt:
   1. Der Füllstoff, das Füllstoff-Härter-(Dispergiermittel)-Gemisch bzw. das Füllstoff-Harz-(Dispergiermittel)-Gemisch wurde in ein Dispergiergefäß eingewogen. Bei dem Dispergiergefäß handelt es sich um einen Vakuumdissolver mit einem mechanischen Rührer mit sehr hoher Drehzahl.
   2. Das Dissolvergefäß wurde auf ca. 0,1 bar Absolutdruck evakuiert.
   3. Das Harz-Härter-Gemisch bzw. das Harz wurde in ein Vorlagegefäß eingewogen und über einen Schlauch mit Schlauchklemme in den Vakuumdissolver injiziert.
   4. Das Gemisch im Vakuumdisolver wurde 5 min. dispergiert.
   5. Gegebenenfalls wurden dann fehlende Härter- bzw. Harzkomponenten injiziert.
   6. Nach Abschalten des Dissolverantriebs wurde mindestens 2 min. Wartezeit eingelegt und dann der Disolver belüftet.
   7. Das Harz-Härter-Füllstoff-Gemisch wurde entnommen und in ein evakuiertes, geschlossenes Plattenwerkzeug zur Ausbildung einer Platte mit einer Dicke von 4 mm injiziert.
   8. Aushärtung (ggf. unter Wärmezufuhr)
   9. Entformung
   10. Wärmebehandlung der Prüfplatte (12 h bei 80 °C). Die Proben wurden zugesägt und untersucht.

In den Versuchen wird das Harz ohne Füllstoffzusatz als Platte Nr. 1 bezeichnet. Platte Nr. 2 ist das Harz unter Zusatz von 20 % Blanc Fixe Brillant^{®}, Fa. Solvay Barium Strontium GmbH. Brillant hat eine mittlere Partikelgröße von ca. 0,8 µm. Dieser Füllstoff wurde direkt in das Harz dispergiert. Platte Nr. 3 ist ein Harz, in welchem 20 Gew.-% von hochfeinem Bariumsulfat unmittelbar im Harz ohne Zusatz eines Dispergiermittels dispergiert wurde. Dieses Bariumsulfat hat eine mittlere Partikelgröße von 0,15 µm.

Platte Nr. 4 enthält das Harz mit 20 Gew.-% hochfeinem Bariumsulfat, welches chemisch dispergiert worden ist; seine Herstellung ist in Beispiel 1.2 und die Weiterverarbeitung zur Vormischung in Beispiel 2 beschrieben. Dies bedeutet, daß dieses Bariumsulfat mit einer Partikelgröße im Bereich von10 bis 30 nm (Primärpartikel) im Härter vorab dispergiert worden ist. Das Gemisch aus dispergiertem Bariumsulfat und Härter wurde dann, wie oben beschrieben, im Epoxidharz im Vakuumdisolver eingemischt.

Die Prüfplatten wurden dann folgenden Untersuchungen unterworfen.

### 1. Zugversuch nach DIN EN ISO 527

Die Prüfung wurde an Schulterstäben mit einem Nennquerschnitt von 10 x 4 mm² durchgeführt. Die parallele Länge betrug 60 mm.

Die Prüfung erfolgte unter den Randbedingungen nach Tabelle 1:

**Tabelle 1: Prüfparameter Zugversuch**

| **Parameter** | **Einheit** | **Wert** |
|---|---|---|
| Umgebungstemperatur | °C | 23 |
| Relative Umgebungsluftfeuchte | % | 50 |
| Prüfgeschwindigkeit | mm / min. | 1,0 |
| Bezugslänge des Feindehnmeßgerätes | mm | 50 |
| Untere Bezugsdehnung für E-Modul-Bestimmung | % | 0,05 |
| Obere Bezugsdehnung für E-Modul-Bestimmung | % | 0,25 |
| Methode der E-Modul-Berechnung | - | Regression |

**Tabelle 2: Prüfergebnisse Zugversuch**

| **Werkstoff** | **Platte Nr.** | **Zug-Elastizitätsmodul MPa** | **Zugfestigkeit MPa** | **Bruchdehnung %** |
|---|---|---|---|---|
| EPILOX M730/M880 | 1 | 3391 | 71,77 | 3,6 |
| EPILOX M730/M888 + 20 % Brillant | 2 | 3427 | 58,52 | 1,85 |
| EPILOX M730/M888 mit 20 % BaSO₄ (1870/V71a-ZTS) mechanisch dispergiert | 3 | 3811 | 62,45 | 1,85 |
| EPILOX M730/M888 mit 20 % BaSO₄ (1870/V71a-ZTS) chemisch dispergiert | 4 | 3133 | 63,58 | 8,62 |

### 2. Biegeversuch nach DIN EN ISO 178

Die Prüfung wurde an Flachstäben mit einem Nennquerschnitt von 15 x 4 mm² durchgeführt.

Die Prüfung erfolgte unter den Randbedingungen nach Tabelle 3.

**Tabelle 3: Prüfparameter Biegeversuch**

| **Parameter** | **Einheit** | **Wert** |
|---|---|---|
| Umgebungstemperatur | °C | 23 |
| Relative Umgebungsluftfeuchte | % | 50 |
| Prüfgeschwindigkeit | mm / min. | 2,0 |
| Stützweite | mm | 64 |

**Tabelle 4: Prüfergebnisse Biegeversuch**

| **Werkstoff** | **Platte Nr.** | **Biege-Elastizitätsmodul MPa** | **Biegefestigkeit MPa** |
|---|---|---|---|
| EPILOX M730/M880 | 1 | 3211 | 144,18 |
| EPILOX M730/M888 + 20 % Brillant | 2 | 3463 | 99,03 |
| EPILOX M730/M888 mit 20 % BaSO₄ (1870/V71a-ZTS) mechanisch dispergiert | 3 | 3865 | 105,51 |
| EPILOX M730/M888 mit 20 % BaSO₄ (1870/V71a-ZTS) chemisch dispergiert | 4 | 3090 | 99,81 |

Die Einzelwerte sind im Anhang dargestellt.

### 3. Schlagbiegeversuch nach EN ISO 179 (Charpy ungekerbt)

Der Schlagbiegeversuch wurde in den Beanspruchungsrichtungen breitseitig und schmalseitig auf einem Pendelschlagwerk bei einer Stützweite von 62 mm durchgeführt.

**Tabelle 5: Ergebnisse der breitseitigen Schlagbiegeprüfung**

| **Werkstoff** | **Platte Nr** | **Schlabiegefestigkeit schmalseitig kJ/m²** | **Schlabiegefestigkeit breitseitig kJ/m²** | **Schlabiegeffestigkeit Mittelwert kJ/m²** |
|---|---|---|---|---|
| EPILOX M730/M880 | 1 | 63,95 | 43,71 | 53,83 |
| EPILOX M730/M888 + 20 % Brillant | 2 | 16,53 | 15,27 | 15,90 |
| EPILOX M730/M888 mit 20 % BaSO₄ (1870/V71α-ZTS) mechanisch dispergiert | 3 | 15,75 | 13,07 | 14,41 |
| EPILOX M730/M888 mit 20 % BaSO₄ (1870/V71α-ZTS) chemisch dispergiert | 4 | 60,06 | 67,43 | 63,75 |

Die Versuche zeigen, daß das mit nanofeinem Bariumsulfat gefüllte Harz bessere Eigenschaften aufweist als das mit dem gröberen Produkt Brillant gefüllte Material. Besonders bemerkenswert ist die hohe Schlagbiegefestigkeit der Platte 4 mit nanofeinem desagglomeriertem, Kristallisationsinhibitor und Dispergiermittel enthaltendem Bariumsulfat, das vorab im Härter dispergiert worden ist. Die Schlagbiegefestigkeit dieses Materials ist sogar noch größer als die Schlagbiegefestigkeit des ungefüllten Harzes.

## Patentansprüche

1. Gehärtetes Epoxidharz mit erhöhter Schlagbiegefestigkeit und Bruchdehnung bei gleichzeitiger Beibehaltung der Steifigkeit, enthaltend desagglomeriertes Bariumsulfat einer mittleren Primärpartikelgröße von <0,5 µm, vorzugsweise <0,1 µm, insbesondere <0,08 µm, ganz besonders <0,05 µm, wobei das Bariumsulfat einen Kristallisationsinhibitor und ein Dispergiermittel enthält.

2. Gehärtetes Epoxidharz nach Anspruch 1, **dadurch gekennzeichnet, daß** das Bariumsulfat in einer Menge von 0,1 bis 50 Gew.-% enthalten ist.

3. Gehärtetes Epoxidharz nach Anspruch 1 oder 2, **dadurch gekennzeichnet, daß** die Primärpartikelgröße des Bariumsulfats im Bereich von 0,01 µm bis 0,5 µm, insbesondere im Bereich 0,01 µm bis 0,1 µm, ganz besonders im Bereich von 0,01 bis 0,05 µm liegt.

4. Gehärtetes Epoxidharz nach Anspruch 1, **dadurch gekennzeichnet, daß** 90 % der Sekundärpartikel des Bariumsulfats kleiner sind als 2 µm, bevorzugt <250 nm, insbesondere <200 nm, ganz besonders bevorzugt <130 nm, insbesondere bevorzugt <100 nm.

5. Gehärtetes Epoxidharz nach Anspruch 1, **dadurch** erhältlich, daß vor Härtung des Epoxidharzes das desagglomerierte Bariumsulfat in einer Vorstufe des gehärteten Epoxidharzes, vorzugsweise im Härter, Polyol und/oder im nicht gehärteten Epoxidharz, dispergiert wird.

6. Gehärtetes Epoxidharz nach Anspruch 5, **dadurch** erhältlich, daß man Härter auf Basis von Polyoxyalkylenaminen oder Anhydridhärter einsetzt.

7. Gehärtetes Epoxidharz nach Anspruch 5, **dadurch gekennzeichnet, daß** Bariumsulfat verwendet wird, welches ein sterisch die Reagglomeration der Bariumsulfatpartikel verhinderndes Dispergiermittel enthält, das Gruppen aufweist, die in Wechselwirkung mit der Oberfläche des Bariumsulfats treten können, vorzugsweise Carboxylat-, Phosphat-, Phosphonat-, Bisphosphonat-, Sulfat- oder Sulfonat-Gruppen, und wobei das Dispergiermittel durch polare Gruppen, die den Bariumsulfatpartikeln eine hydrophilierte Oberfläche verleihen, vorzugsweise Hydroxygruppen oder Aminogruppen, substituiert ist, welche die An- oder Einkoppelung der Bariumsulfatpartikel in das Epoxid und dabei eine weitere Desagglomerierung ermöglichen.

8. Gehärtetes Epoxidharz nach Anspruch 7, **dadurch gekennzeichnet, daß** das Dispergiermittel ein durch terminale Hydroxygruppen an den Ethergruppen substituiertes Polyethercarboxylat ist.

9. Gehärtetes Epoxidharz nach Anspruch 1, **dadurch gekennzeichnet, daß** der Kristallisationsinhibitor Zitronensäure oder Natriumpolyacrylat ist.

10. Kompositmaterial, welches Epoxidharz gemäß einem der Ansprüche 1 bis 9 enthält.

11. Kompositmaterial nach Anspruch 10, **dadurch gekennzeichnet, daß** als Verstärkungsmittel Kohlefaser oder Glasfaser enthalten ist.

12. Gemisch aus Epoxidharz-Vorstufe, vorzugsweise Härter, und Bariumsulfat mit einer Primärpartikelgröße <0,5 µm, insbesondere <0,1 µm, das Kristallisationsinhibitor und ein Dispergiermittel enthält, wobei das Dispergiermittel vorzugsweise ein durch terminal an den Polyethergruppen durch Hydroxylgruppen substituiertes Polyetherpolycarboxylat ist.

13. Gemisch nach Anspruch 12, **dadurch gekennzeichnet, daß** das Bariumsulfat in einer Menge von 0,1 bis 50 Gew.-%, bezogen auf das Gesamtgewicht des Gemisches, enthalten ist.

14. Gemisch aus nicht gehärtetem Epoxidharz und Bariumsulfat mit einer Partikelgröße <0,5 µm, insbesondere <0,1 µm, wobei das Bariumsulfat einen Kristallisationsinhibitor und ein Dispergiermittel enthält, wobei das Dispergiermittel vorzugsweise ein durch terminal an den Polyethergruppen durch Hydroxylgruppen substituiertes Polyetherpolycarboxylat ist.

15. Gemisch nach Anspruch 14, **dadurch gekennzeichnet, daß** das Bariumsulfat in einer Menge von 0,1 bis 50 Gew.-%, bezogen auf das Gesamtgewicht des Gemisches, enthalten ist.

16. Verfahren zur Herstellung von Epoxidharzen gemäß einem der Ansprüche 1 bis 9, **dadurch gekennzeichnet, daß** man Bariumsulfat einer Partikelgröße <0,5 µm, insbesondere <0,1 µm, welches einen Kristallisationsinhibitor und ein Dispergiermittel enthält, wobei das Dispergiermittel vorzugsweise ein durch terminal an den Polyethergruppen durch Hydroxylgruppen substituiertes Polyethercarboxylat ist, in der Vorstufe des gehärteten Epoxid-Harzes, vorzugsweise im Härter oder im nicht gehärteten Epoxidharz, desagglomeriert und dann das gehärtete Epoxidharz erzeugt.

17. Verwendung des Kompositmaterials nach Anspruch 10 oder 11 im Bootsbau, in Windkraftanlagen, Rohren, Behältern, im Fahrzeugbau oder im Flugzeugbau.

## Claims

1. Cured epoxy resin with increased flexural impact strength and breaking extension coupled with retention of stiffness, comprising deagglomerated barium sulphate having an average primary particle size of < 0.5 µm, preferably < 0.1 µm, in particular < 0.08 µm, very particularly 0.05 µm, the barium sulphate comprising a crystallization inhibitor and a dispersant.

2. Cured epoxy resin according to Claim 1, **characterized in that** the barium sulphate is present in an amount of 0.1 % to 50 % by weight.

3. Cured epoxy resin according to Claim 1 or 2, **characterized in that** the primary particle size of the barium sulphate is in the range from 0.01 µm to 0.5 µm, in particular in the range 0.01 µm to 0.1 µm, very particularly in the range from 0.01 to 0.05 µm.

4. Cured epoxy resin according to Claim 1, **characterized in that** 90 % of the secondary barium sulphate particles are smaller than 2 µm, preferably < 250 nm, in particular < 200 nm, with particular preference < 130 nm, with particular preference < 100 nm.

5. Cured epoxy resin according to Claim 1, obtainable by dispersing the deagglomerated barium sulphate in a precursor of the epoxy resin prior to its curing, preferably in the hardener, polyol and/or in the uncured epoxy resin.

6. Cured epoxy resin according to Claim 5, obtainable by using hardeners based on polyoxyalkylenamines or anhydride hardeners.

7. Cured epoxy resin according to Claim 5, **characterized in that** barium sulphate is used which comprises a dispersant that sterically prevents reagglomeration of the barium sulphate particles and that contains groups which are able to interact with the surface of the barium sulphate, preferably carboxylate, phosphate, phosphonate, bisphosphonate, sulphate or sulphonate groups, the dispersant being substituted by polar groups which endow the barium sulphate particles with a hydrophilicized surface, preferably hydroxyl groups or amino groups, which permit the coupling of the barium sulphate particles to or into the epoxide and, accompanying the coupling, a further deagglomeration.

8. Cured epoxy resin according to Claim 7, **characterized in that** the dispersant is a polyether carboxylate which is substituted by terminal hydroxyl groups on the ether groups.

9. Cured epoxy resin according to Claim 1, **characterized in that** the crystallization inhibitor is citric acid or sodium polyacrylate.

10. Composite material comprising epoxy resin according to any one of Claims 1 to 9.

11. Composite material according to Claim 10, **characterized in that** it comprises carbon fibre or glass fibre reinforcement.

12. Composition comprising epoxy resin precursor, preferably hardener, and barium sulphate having a primary particle size < 0.5 µm, in particular < 0.1 µm, and comprising crystallization inhibitor and a dispersant, the dispersant preferably being a polyether polycarboxylate substituted terminally on the polyether groups by hydroxyl groups.

13. Composition according to Claim 12, **characterized in that** the barium sulphate is present in an amount of 0.1 % to 50 % by weight, based on the total weight of the composition.

14. Composition comprising uncured epoxy resin and barium sulphate having a primary particle size < 0.5 µm, in particular < 0.1 µm, the barium sulphate comprising crystallization inhibitor and a dispersant, the dispersant preferably being a polyether polycarboxylate substituted terminally on the polyether groups by hydroxyl groups.

15. Composition according to Claim 14, **characterized in that** the barium sulphate is present in an amount of 0.1 % to 50 % by weight, based on the total weight of the composition.

16. Process for producing epoxy resins according to any one of Claims 1 to 9, **characterized in that** barium sulphate with a particle size < 0.5 µm, in particular <0.1 µm, which comprises a crystallization inhibitor and a dispersant, the dispersant preferably being a polyether carboxylate substituted terminally on the polyether groups by hydroxyl groups, is deagglomerated in the precursor of the cured epoxy resin, preferably in the hardener or in the uncured epoxy resin, and then the cured epoxy resin is produced.

17. Use of the composite material according to Claim 10 or 11 in watercraft construction, in wind turbines, pipes, containers, in vehicle construction or in aircraft construction.

## Revendications

1. Résine époxyde durcie ayant une résistance à la flexion et un allongement à la rupture élevés avec une conservation simultanée de la rigidité, contenant du sulfate de baryum désaggloméré d'une taille de particule primaire moyenne < 0,5 µm, de préférence < 0,1 µm, notamment < 0,08 µm, tout particulièrement < 0,05 µm, le sulfate de baryum contenant un inhibiteur de cristallisation et un agent de dispersion.

2. Résine époxyde durcie selon la revendication 1, **caractérisée en ce que** le sulfate de baryum est contenu en une quantité de 0,1 à 50 % en poids.

3. Résine époxyde durcie selon la revendication 1 ou 2, **caractérisée en ce que** la taille de particule primaire du sulfate de baryum se situe dans la plage allant de 0,01 µm à 0,5 µm, notamment dans la plage allant de 0,01 µm à 0,1 µm, tout particulièrement dans la plage allant de 0,01 à 0,05 µm.

4. Résine époxyde durcie selon la revendication 1, **caractérisée en ce que** 90 % des particules secondaires du sulfate de baryum sont inférieures à 2 µm, de préférence < 250 nm, notamment < 200 nm, de manière tout particulièrement préférée < 130 nm, de manière notamment préférée < 100 nm.

5. Résine époxyde durcie selon la revendication 1, **caractérisée en ce que** le sulfate de baryum désaggloméré est dispersé dans un précurseur de la résine époxyde durcie avant le durcissement de la résine époxyde, de préférence dans l'agent de durcissement, le polyol et/ou dans la résine époxyde non durcie.

6. Résine époxyde durcie selon la revendication 5, **caractérisée en ce qu'**un agent de durcissement à base de polyoxyalkylèneamines ou un agent de durcissement anhydride est utilisé.

7. Résine époxyde durcie selon la revendication 5, **caractérisée en ce qu'**un sulfate de baryum qui contient un agent de dispersion qui empêche stériquement la réagglomération des particules de sulfate de baryum est utilisé, qui comporte des groupes qui peuvent entrer en interaction avec la surface du sulfate de baryum, de préférence des groupes carboxylate, phosphate, phosphonate, biphosphonate, sulfate ou sulfonate, l'agent de dispersion étant substitué par des groupes polaires, qui confèrent aux particules de sulfate de baryum une surface hydrophilisée, de préférence des groupes hydroxy ou des groupes amino, qui permettent le couplage des particules de sulfate de baryum dans l'époxyde et ainsi une désagglomération supplémentaire.

8. Résine époxyde durcie selon la revendication 7, **caractérisée en ce que** l'agent de dispersion est un polyéther-carboxylate substitué par des groupes hydroxy terminaux sur les groupes éther.

9. Résine époxyde durcie selon la revendication 1, **caractérisée en ce que** l'inhibiteur de cristallisation est l'acide citrique ou le polyacrylate de sodium.

10. Matériau composite, qui contient une résine époxyde selon l'une quelconque des revendications 1 à 9.

11. Matériau composite selon la revendication 10, **caractérisé en ce qu'**une fibre de carbone ou une fibre de verre est contenue en tant qu'agent renforçant.

12. Mélange constitué d'un précurseur de résine époxyde, de préférence un agent de durcissement, et de sulfate de baryum ayant une taille de particule primaire < 0,5 µm, notamment < 0,1 µm, qui contient un inhibiteur de cristallisation et un agent de dispersion, l'agent de dispersion étant de préférence un polyéther-polycarboxylate substitué en position terminale sur les groupes polyéther par des groupes hydroxyle.

13. Mélange selon la revendication 12, **caractérisé en ce que** le sulfate de baryum est contenu en une quantité de 0,1 à 50 % en poids, par rapport au poids total du mélange.

14. Mélange constitué d'une résine époxyde non durcie et d'un sulfate de baryum ayant une taille de particule < 0,5 µm, notamment < 0,1 µm, le sulfate de baryum contenant un inhibiteur de cristallisation et un agent de dispersion, l'agent de dispersion étant de préférence un polyéther-polycarboxylate substitué en position terminale sur les groupes polyéther par des groupes hydroxyle.

15. Mélange selon la revendication 14, **caractérisé en ce que** le sulfate de baryum est contenu en une quantité de 0,1 à 50 % en poids, par rapport au poids total du mélange.

16. Procédé de fabrication de résines époxyde selon l'une quelconque des revendications 1 à 9, **caractérisé en ce qu'**un sulfate de baryum ayant une taille de particule < 0,5 µm, notamment < 0,1 µm, qui contient un inhibiteur de cristallisation et un agent de dispersion, l'agent de dispersion étant de préférence un polyéther-carboxylate substitué en position terminale sur les groupes polyéther par des groupes hydroxyle, est désaggloméré dans le précurseur de la résine époxyde durcie, de préférence dans l'agent de durcissement ou dans la résine époxyde non durcie, puis la résine époxyde durcie est formée.

17. Utilisation du matériau composite selon la revendication 10 ou 11 dans la construction de bateaux, dans des éoliennes, des tubes, des contenants, dans la construction de véhicules ou dans la construction d'avions.
